# EUROPEAN PATENT APPLICATION

(11) **EP 2 752 328 A1**
(43) Date of publication of application: **09.07.2014**
(21) Application number: 14000019.1
(22) Date of filing: 03.01.2014
(51) Int. Cl.: B60K 25/10

(54) **Generating device of vehicle**

(30) Priority: 07.01.2013 TW 102100432
(71) Applicant: Liao, Jen-Li, 22143 New Taipei City (TW); Liao, Yu-Seng, 22143 New Taipei City (TW)
(72) Inventor: Liao, Jen-Li, 22143 New Taipei City (TW); Liao, Yu-Seng, 22143 New Taipei City (TW)
(74) Representative: Zeitler - Volpert - Kandlbinder

(57) **Abstract**

A generating device of vehicle installed on a car body's(10) bottom and comprising: at least a fastening device(27); at least a girder(22) joining the fastening device (27) and oscillating vertically; at least a strut (24) fixed at the girder (22) far away from the fastening device (27); at least an alternator (23) under the girder (22); at least a roller (25) joining the strut (24) far away from the girder (22), contacting ground surfaces and oscillating vertically; at least a battery (30) electrically connected to the alternator (23). As such, the rollers (25) and the girders (22) driven by a running vehicle oscillate vertically and the girders (22) oscillating downward transmit kinetic energy to the alternators (23) in which kinetic energy is constantly transformed to electric energy stored in the batteries (30).

## Description

### BACKGROUND OF THE INVENTION

### 1. Field of the Invention

A generating device of vehicle in the present disclosure is installed on a car body's bottom and transforms dynamic energy generated by rollers oscillating and contacting ground surfaces to electric energy which is stored in batteries finally.

### 2. Descriptions of the Related Art

Automobiles are common vehicles of modern people in their daily lives. Furthermore, the electric vehicle as environment-friendly transportation characteristic of neither air pollution nor environment noise is the main topic of current and future automobile development among issues such as oil depletion, energy efficiency, carbon reduction, and green application. In this regard, how to transform a running vehicle's kinetic energy to electric power is a popular topic.

Among current technologies, Taiwan Patent No. M390361 discloses a power generation apparatus converting kinetic energy generated by compression of wheels to electric power. The power generation apparatus comprises movable press plates on roads or rails run over by wheels, holders beneath the movable press plates, and a plurality of magnetic elements with same but repulsive polarity between the movable press plates and holders. Each of the movable press plates which are situated above roads or rails slightly comprises a gear rack laterally and first, second and third wheel gears for transmission of kinetic energy beside the gear rack: the first wheel gear is coupled with the gear rack and the second wheel gear; the second wheel gear (the third wheel gear) is centrally provided with a drive shaft; the second wheel gear spins in a unidirectional way due to a one-way bearing installed between the second wheel gear and the drive shaft; the second wheel gear and the third wheel gear are interposed by a volute spring; the third wheel gear is coupled with an alternator's gear wheel; the movable press plates run over by wheels generate kinetic energy which is used in driving the gear rack, spinning the first wheel gear and the second wheel gear, and screwing the volute spring; the volute spring releases kinetic energy to drive the third wheel gear and further the alternator's gear wheel for power generation.

The power generation apparatus based on the movable press plates on roads or railways run over by car wheels for electricity generation theoretically is a bulky, difficultly realized and unideal design increasing risks.

The Patent Application No. 095107881 discloses a device for recovering renewable energy with alternator, aerodynamic, and electronic valve powers which comprises: a tire which has a groove, a rim, and a stator silicon steel sheet with copper wires and magnetic sheets at a lateral edge; a rotary core fixed on the rim; a rotor disc installed on the rotary core; a magnetic sheet installed on the rotor disc and corresponding to the magnetic sheet on the stator silicon steel sheet; a pinion installed on the rotary core and coupled with the rotor disc's gear wheel; an eccentric shaft installed on the rotor disc; an air compressor cylinder situated at the stator silicon steel sheet and comprising a spring, a piston, vanes linking the eccentric shaft, and a splitter plate internally; a rotor lever centrally fixed in the rotor disc; two push rods opposite to each other and joining the rotor lever's two ends; a charger and batteries connected to the copper wires. As such, the device for recovering renewable energy with alternator, aerodynamic, and electronic valve powers promotes a vehicle's power, generating electricity, and inflating tires for less consumption of fuels.

The above technology for power generation is based on a rotary tire which drives a rotor lever and a rotor disc to spin and develop relative rotation between a rotor disc and a stator silicon steel sheet. However, the complicated apparatus for power generation is difficultly practiced and deserves to be rectified.

Despite feasible techniques of converting dynamic energy to electric power (e.g., alternator) theoretically, how to catch kinetic energy generated by a running car and apply the techniques by referring to a vehicle model are still kept pending. Accordingly, the main topics confronted by the person skilled in the art are to use kinetic energy of a running vehicle and rectify a conventional generating device of vehicle.

Having considered known disadvantages, the inventor designed a generating device of vehicle as one reasonable solution after long-term research and development.

### SUMMARY OF THE INVENTION

The object of the present disclosure is to provide a generating device of vehicle used in an automobile, an electric vehicle, a bus, a truck, a motor tricycle or a train and installed on a car body's bottom and comprising:
at least a fastening device installed on a car body's bottom;
at least a girder joining the fastening device for vertical movement;
at least a strut fixed at the girder far away from the fastening device;
at least an alternator under the girder;
at least a roller joining the strut far away from the girder, contacting ground surfaces, and oscillating vertically with the roller;
at least a battery electrically connected to the alternator;
characterized in that the rollers and the girders driven by a running vehicle oscillate vertically and the girders oscillating downward transmit kinetic energy to the alternators in which kinetic energy is constantly transformed to electric energy stored in the batteries.

The other object of the present disclosure is to provide a generating device of vehicle with the power generation device installed on the bottom of the car body, for example, at the center of a chassis or around a trunk under the car body, batteries under an engine hood, a crossbar between the rollers, and at least an alternator under the crossbar.

The further object of the present disclosure is to provide a generating device of vehicle characterized in that the alternators include, without limitation, linear alternators, pedal alternators, and contact alternators used in receiving kinetic energy.

The yet other object of the present disclosure is to provide a generating device of vehicle characterized in that the power generation device is provided with an automatic controller and at least two batteries, a first battery and a second battery, electrically connected to a motor and recharged by the alternators according to a mechanism as follows: the automatic controller commands the first battery to suspend electricity supply and the second battery substituting for the first battery to continue when stored electricity supplied to automotive electric appliances is lowered to 40%; all alternators recharge the first battery until it displays full charge; the automatic controller also commands the second battery to suspend electricity supply and the first battery substituting for the second battery to continue when stored electricity is lowered to 40%. As such, the alternators can recharge two batteries alternately.

The yet still other object of the present disclosure is to provide a generating device of vehicle characterized in that the two batteries, a first battery and a second battery, each of which is recharged by its counterpart battery according to a mechanism as follows: the first battery electrically connected to a first motor; the first motor driving a first driving wheel; the first driving wheel coupled with a second driving wheel; the second driving wheel internally coupled with three third driving wheels; the third driving wheels coupled with a fourth driving wheel; the fourth driving wheel driving a second motor; the second motor electrically connected to the second battery. In the case of the first battery with more electricity than the second battery, the first battery supplies electricity to run the first motor, the driving wheels, and the second motor in sequence for recharge of the second battery from the first battery.

For technical features and effects in terms of the present disclosure completely comprehended and recognized, the preferred embodiments and accompanying drawings are thoroughly described hereinafter.

### BRIEF DESCRIPTION OF THE DRAWINGS

FIG. 1 is a schematic view which illustrates an automobile with a generating device of vehicle integrated.
FIG. 2 is a schematic view illustrating a generating device of vehicle in the present disclosure.
FIG. 3 is a sectional view illustrating a generating device of vehicle in service.
FIG. 4 is a sectional enlargement view illustrating a generating device of vehicle in service.
FIG. 5 is a perspective view illustrating a roller in the present disclosure.
FIG. 6 is a schematic view illustrating a roller in service in an alternative embodiment.
FIG. 7 is a schematic view illustrating an alternator in service in an alternative embodiment.
FIG. 8 is a schematic view illustrating a generating device of vehicle used in a motor tricycle.
FIG. 9 is a schematic view illustrating batteries which are connected to each other in the present disclosure.
FIG. 10 is a schematic view illustrating batteries electrically connected motors in the present disclosure.

### DETAILED DESCRIPTION OF THE PREFERRED EMBODIMENTS

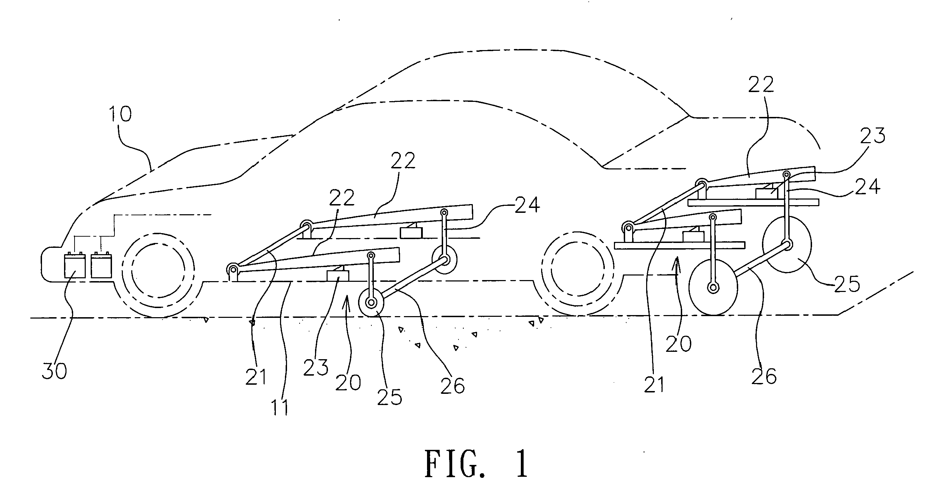

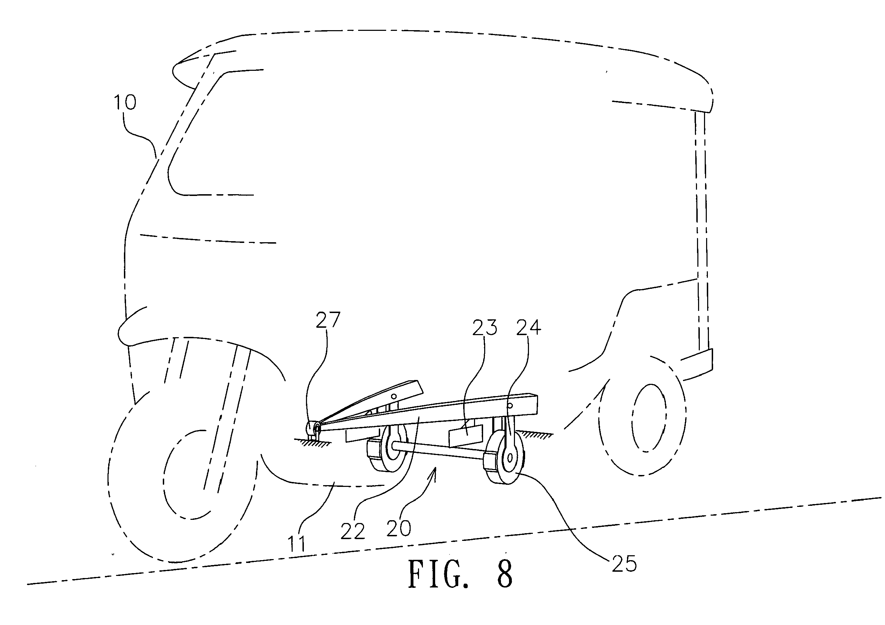

Please refer to FIGS. 1, 2 and 3 which illustrate a generating device of vehicle used in an automobile (FIG. 1), an electric vehicle, a bus, a truck, a motor tricycle (FIG. 8) or a train. As shown in the embodiment, the automobile comprises a car body 10 with a bottom and a power generation device 20 installed on the bottom, for example, at the center of a chassis 11 or around a trunk underneath the car body 10. In the embodiment, the power generation device 20 is provided with a fastening device, for example, a holder 21 which joins girders 22 arranged in parallel, separated by a specific distance and oscillating vertically with the holder 21. The girders 22 contact at least an alternator 23 underneath, which can be a pedal alternator, a linear alternator or a contact alternator for transforming kinetic energy to electric energy and electrically connected to batteries 30, for example, lithium iron phosphate batteries under an automobile's engine hood.

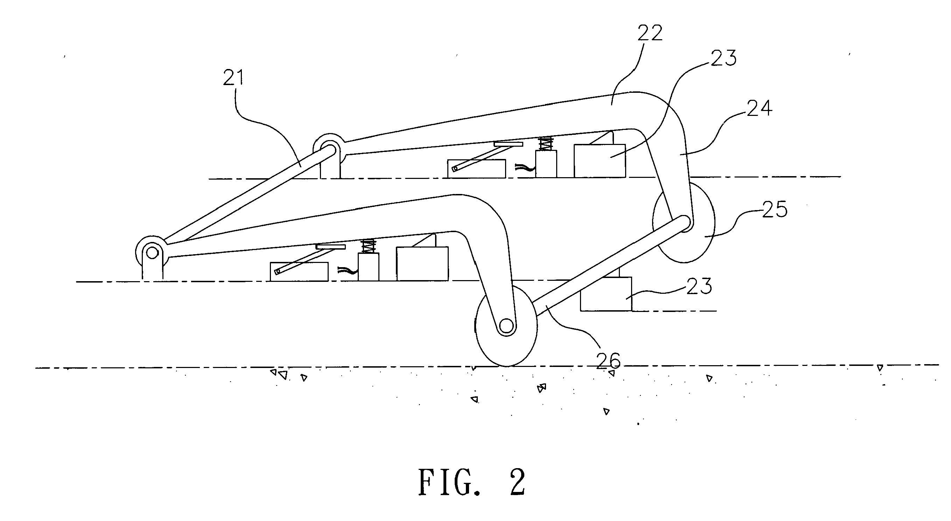

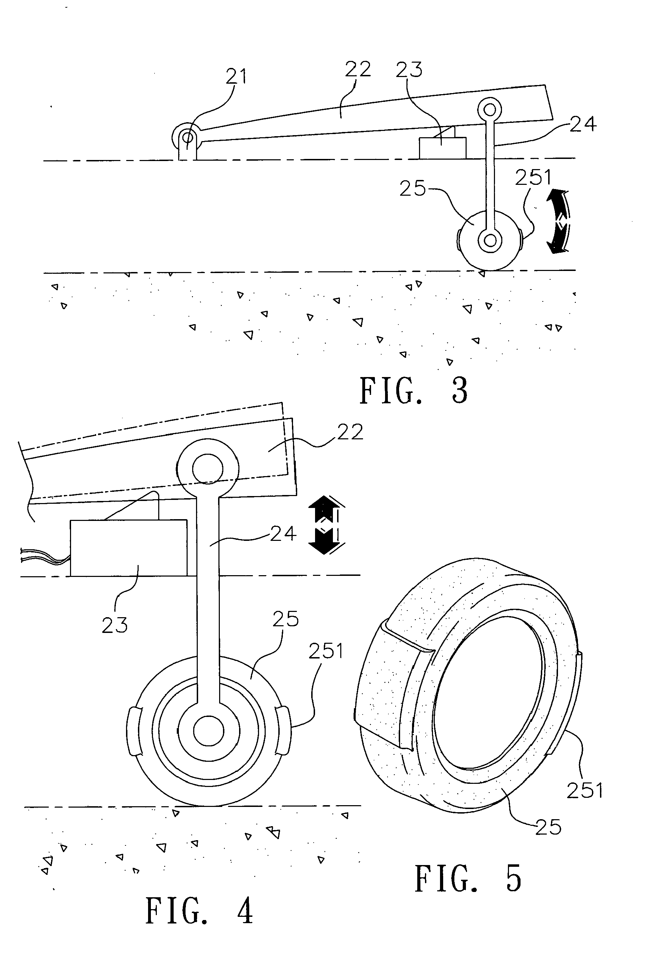

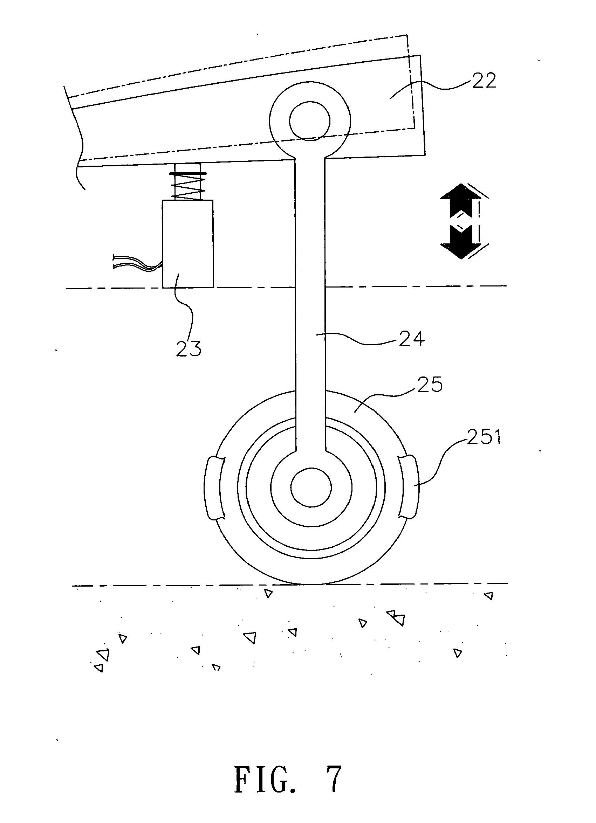

The girder 22 links a strut 24 far away from the holder 21 through a fastener (not shown in figures), for example, a bolt or a rivet. The strut 24 is connected to an oscillating roller 25 at the other end. In the embodiment, each of the oscillating rollers 25 is provided with a number of convex bodies 251 (FIG. 5) spaced evenly and not totally covering the rim of the roiler 25, for example, half a circumference of the roller 25. As shown in FIGS. 2 and 7, the rollers 25 in an automobile running on a roadway just contact road surfaces and further drive the girders 22 to rebound simultaneously with the convex bodies 251 touching road surfaces. On the contrary, the rollers 25 with the convex bodies 251 leaving road surfaces allow the girders 22 to lean against the alternator 23 and oscillate vertically (FIGS. 3 and 4), for example, the girders 22 oscillating downward transmit kinetic energy to the alternator 23 in which the kinetic energy is transformed to electric energy stored in the batteries 30. As such, the constantly generated kinetic energy can be transformed to electric energy and further stored in the batteries 30.

As shown in FIG. 2, the rollers 25 is further provided with a crossbar 26 in between linking the rollers 25 for installation of at least an alternator 23 underneath which are electrically connected to the batteries 30. While oscillating downward, the crossbar 26, which rebounds with the rollers 25 oscillating vertically, transmits kinetic energy to the alternator 23 in which the kinetic energy is transformed to electric energy stored in the batteries 30. As such, the constantly generated kinetic energy can be transformed to electric energy and further stored in the batteries 30.

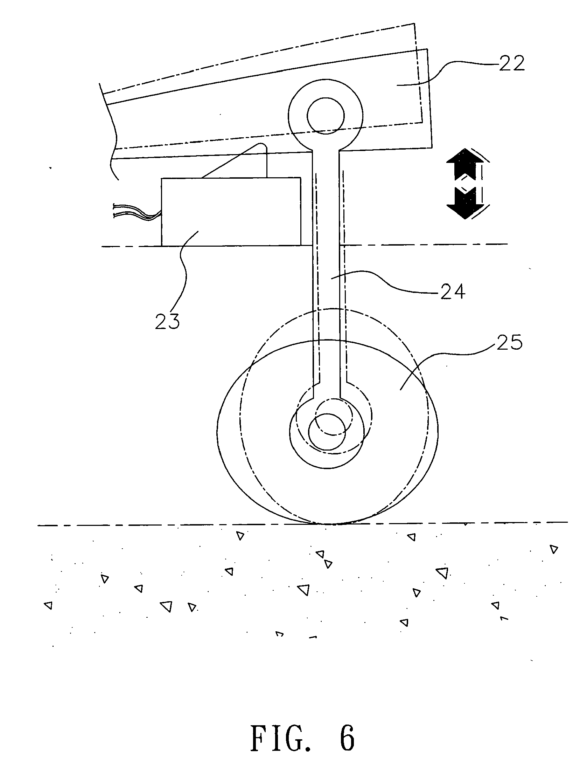

As shown in FIG. 6, the rollers 25 vertically oscillating with a running car are oval rollers which keep the girders 22 rebound up and down constantly. While oscillating downward, the girders 22 allow kinetic energy to be transmitted to the alternator 23 in which the kinetic energy is transformed to electric energy stored in the batteries 30. As such, the constantly generated kinetic energy can be transformed to electric energy and further stored in the batteries 30.

Please refer to FIG. 8 which illustrates a generating device of vehicle in the present disclosure is applicable to a motor tricycle such as tulk tulk car in one embodiment. The motor tricycle comprises a car body 10, a power generation device 20 installed on the bottom of the car body 10, for example, at the center of a chassis 11 under the car body 10. Moreover, the power generation device 20 comprises a fastening device 27 joining girders 22, both of which extend outward and develop a specific included angle between 15 and 45 degrees; the girder 22 is provided with a strut 24 far away from the fastening device 27; the girder 22 and the strut 24 are connected to each other with a fastener; the strut 24 further links a vertically oscillating roller 25 at one end; the girders 22 are flexibly connected to the fastening device 27 for vertical oscillation and contact at least an alternator 23 underneath in which kinetic energy is transformed to electric energy; the alternators 23 which can be pedal alternators, linear alternators or contact alternators are electrically connected to batteries 30 (not shown in FIG. 8), for example, lithium iron phosphate batteries under a backseat.

As mentioned above, the girder 22 and the strut 24 can be manufactured as one unity in favor of kinetic energy transmitted to the alternator 23 when the girder 22 oscillates downward.

In the case of a generating device of vehicle used in a train, the rollers along with the girders 22 will oscillate obviously to generate power efficiently because of railroad ties under rails.

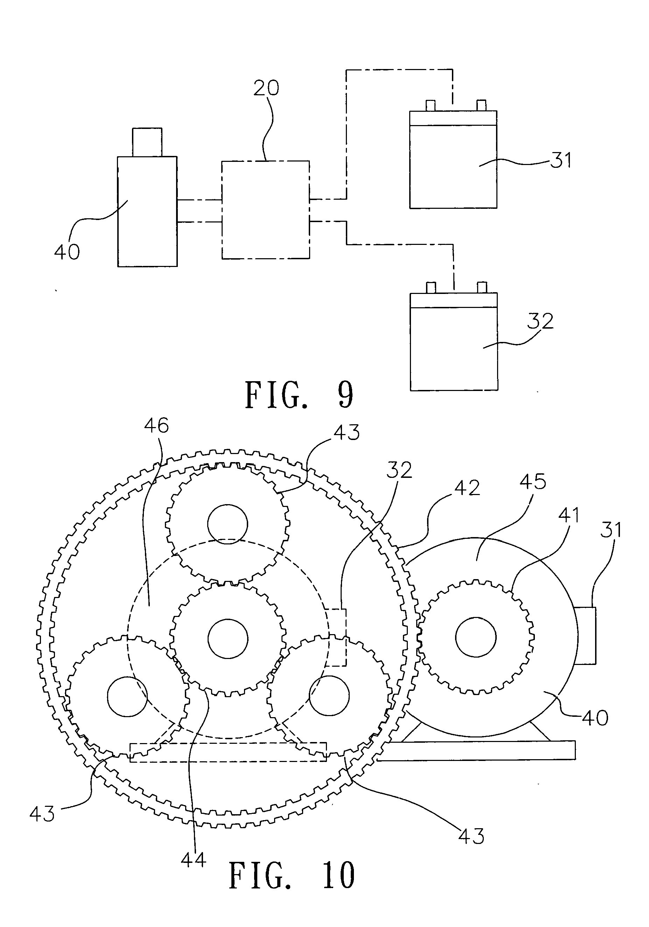

A mechanism to recharge a battery by alternators is disclosed hereinafter. Please refer to FIG. 9 which illustrates the power generation device 20 with an automatic controller (not shown in FIG. 9) installed and at least two batteries, a first battery 31 and a second battery 32, electrically connected to a motor 40. The mechanism to recharge a battery is shown as follows. The automatic controller commands the first battery 31 to suspend electricity supply and the second battery 32 substituting for the first battery 31 to continue when stored electricity supplied to electric appliances, for example, automotive air conditioner, lighting, computer, controller and warning device, is lowered to 40%. All alternators recharge the first battery 31 until it displays full charge. The automatic controller also commands the second battery 32 to suspend electricity supply and the first battery 31 substituting for the second battery 32 to continue when stored electricity is lowered to 40%. As such, the alternators can recharge two batteries alternately.

The present disclosure also presents a mechanism for a power generation system to recharge a battery displaying "low battery" by a counterpart displaying "full charge" when a vehicle engine is turned on or off. Please refer to FIG. 10 which illustrates an embodiment as follows: a first battery 31 electrically connected to a first motor 45; the first motor 45 driving a first driving wheel 45; the first driving wheel 45 coupled with a second driving wheel 46; the second driving wheel 46 internally coupled with three third driving wheels 43; the third driving wheels 43 coupled with a fourth driving wheel 44; the fourth driving wheel 44 driving a second motor 46; the second motor 46 electrically connected to a second battery 32. In the case of the first battery 31 with more electricity than the second battery 32, the first battery 31 supplies electricity to run the first motor 45, the first driving wheel 45, the second driving wheel 46, the third driving wheels 43, the fourth driving wheel 44, and the second motor 46 in sequence for recharging the second battery 32 from the first battery 31. As such, a low-power motor is able to drive a high-power motor for recharge. Please refer to FIG. 10 again. The low-power first motor 45 electrically connected to the first battery 31 is used in driving the high-power second motor 46 electrically connected to the second battery 32 for recharge.

As mentioned above, the motors (alternators) may interchange their functions in a reversible course.

The above descriptions present embodiments of a generating device of vehicle in the present disclosure. However, the above descriptions are preferred embodiments which do not limit the scope of the generating device of vehicle; any equivalent change or improvement without departing from spirit of the present disclosure should be incorporated in claims herein.

## Claims

1. A generating device of vehicle installed on a car body's (10) bottom and comprising:
at least a fastening device (27) installed on said car body's (10) bottom;
at least a girder (22) joining said fastening device (27) for vertical movement;
at least a strut (24) fixed at said girder (22) far away from said fastening device (27);
at least an alternator (23) under said girder (22);
at least a roller (25) joining said strut (24) far away from said girder (22),
contacting ground surfaces, and oscillating vertically with said roller (25);
at least a battery (30) electrically connected to said alternator (23);
**characterized in that** said rollers (25) and said girders (22) driven by a running vehicle oscillate vertically and said girders (22) oscillating downward transmit kinetic energy to said alternators (23) in which kinetic energy is constantly transformed to electric energy stored in said batteries (30).

2. A generating device of vehicle according to claim 1 is an automobile, an electric vehicle, a bus, a truck, a motor tricycle or a train.

3. A generating device of vehicle according to claim 1 wherein said alternators are pedal alternators, linear alternators or contact alternators.

4. A generating device of vehicle according to claim 1 wherein said rollers (25) are oval rollers.

5. A generating device of vehicle according to claim 1 wherein each of said rollers (25) is provided with a number of convex bodies (251) spaced evenly and not totally covering said roller's (25) rim.

6. A generating device of vehicle according to claim 1 wherein said two rollers (25) are provided with a crossbar (26) in between which is connected to said two rollers (25) and prepared for installation of at least an alternator (23) underneath.

7. A generating device of vehicle according to claim 1 wherein said batteries (30) are installed under an engine hood.

8. A generating device of vehicle according to claim 1 wherein said generation device (20) is installed on said car body's (10) bottom such as at a chassis's center or around a trunk under said car body (10).

9. A generating device of vehicle according to claim 1 wherein said batteries (30) are lithium iron phosphate batteries.

10. A generating device of vehicle according to claim 1 wherein said girder (22) is integrated with said strut (24).

11. A generating device of vehicle according to claim 1 wherein said fastening device (27) is a holder (21) which joints said girders (22) arranged in parallel, separated by a specific distance and oscillating vertically with said holder (21).

12. A generating device of vehicle according to claim 1 wherein said fastening device (27) joints said two girders (22), both of which extend outward, develop a specific included angle between 15 and 45 degrees, and oscillate vertically.

13. A generating device of vehicle according to claim 1 wherein said generation device (20) is provided with an automatic controller and at least two batteries (30), a first battery (31) and a second battery (32), electrically connected to a motor (40) and alternately recharged by said alternators according to a mechanism as follows: said automatic controller commands said first battery (31) to suspend electricity supply and said second battery (32) substituting for said first battery (31) to continue when stored electricity supplied to automotive electric appliances is lowered to 40%; all alternators (23) recharge said first battery (31) until said first battery (31) displays full charge; said automatic controller also commands said second battery (32) to suspend electricity supply and said first battery (31) substituting for said second battery (32) to continue when stored electricity is lowered to 40%.

14. A generating device of vehicle according to claim 1 comprises at least two motors (40) as well as at least two batteries (30), a first battery (31) and a second battery (32), each of which is recharged by its counterpart battery according to a mechanism as follows: said first battery (31) electrically connected to a first motor (45); said first motor (45) driving a first driving wheel (41); said first driving wheel (41) coupled with a second driving wheel (42); said second driving wheel (42) internally coupled with three third driving wheels (43); said third driving wheels (43) coupled with a fourth driving wheel(44); said fourth driving wheel (44) driving a second motor (46); said second motor (46) electrically connected to said second battery (32) for recharge.
